# EUROPEAN PATENT APPLICATION

(11) **EP 4 106 383 A1**
(43) Date of publication of application: **21.12.2022**
(21) Application number: 20918358.1
(22) Date of filing: 13.02.2020
(51) Int. Cl.: H04W 16/28, H04W 72/04

(54) **TERMINAL, RADIO COMMUNICATION METHOD, AND BASE STATION**

(71) Applicant: NTT DOCOMO, INC., Chiyoda-ku Tokyo 100-6150 (JP)
(72) Inventor: MATSUMURA, Yuki, Tokyo 100-6150 (JP); NAGATA, Satoshi, Tokyo 100-6150 (JP); GUO, Shaozhen, Beijing 100190 (CN); WANG, Jing, Beijing 100190 (CN); HOU, Xiaolin, Beijing 100190 (CN)
(74) Representative: Hoffmann Eitle
(86) International application number: PCT/JP2020/005658
(87) International publication number: WO 2021/161475

(57) **Abstract**

A terminal according to one aspect of the present disclosure includes a control section that, when two or more different control resource set (CORESET) pool indices are configured and a radio link monitoring reference signal (RLM-RS) is not configured, uses one or more reference signals for an active transmission configuration indication (TCI) state associated with a lowest CORESET pool index for radio link monitoring, and a receiving section that receives the one or more reference signals. According to one aspect of the present disclosure, a radio link can be appropriately monitored.

## Description

### Technical Field

The present disclosure relates to a terminal, a radio communication method, and a base station in next-generation mobile communication systems.

### Background Art

In the universal mobile telecommunications system (UMTS) network, the specifications of long term evolution (LTE) have been drafted for the purpose of further increasing data rates, providing low delays, and so on (Non Patent Literature 1). In addition, the specifications of LTE-Advanced (third generation partnership project (3GPP) Release (Rel.) 10 to 14) have been drafted for the purpose of further increasing capacity and advancement of LTE (3GPP Rel. 8 and 9).

Successor systems to LTE (for example, also referred to as 5th generation mobile communication system (5G), 5G+ (plus), 6th generation mobile communication system (6G), New Radio (NR), or 3GPP Rel. 15 and subsequent releases) are also being studied.

In the existing LTE systems (for example, 3GPP Rel. 8 to 14), a user terminal (user equipment (UE)) uses at least one of a UL data channel (for example, physical uplink shared channel (PUSCH)) or a UL control channel (for example, physical uplink control channel (PUCCH)) to transmit uplink control information (UCI).

In existing LTE systems (LTE Rel. 8 to 14), radio link quality is monitored (radio link monitoring (RLM)). When a radio link failure (RLF) is detected based on RLM, reestablishment of radio resource control (RRC) connection is requested of the user terminal (user equipment: UE).

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

It is considered that radio link monitoring (RLM) is also used in a future radio communication system (for example, NR). In the NR, the base station may configure a radio link monitoring reference signal (Radio Link Monitoring RS (RLM-RS)) for each BWP for the UE by using higher layer signaling.

If no parameters are provided for the RLM-RS, the UE may use the RS provided for the active TCI state for PDCCH reception as the RLM-RS. Here, there is a case in which the UE determines the RLM-RS based on the search space set having the shortest monitoring periodicity.

However, if the UE is not provided with parameters for RLM-RS, in some cases, it is not clear how the UE determines the parameters. If this operation is not clear, a discrepancy between the base station and the UE occurs for the parameter, the performance of the RLM may be reduced, and the communication throughput may be reduced.

Therefore, an object of the present disclosure is to provide a terminal, a radio communication method, and a base station capable of appropriately monitoring a radio link.

### Solution to Problem

A terminal according to one aspect of the present disclosure includes a control section that, when two or more different control resource set (CORESET) pool indices are configured and a radio link monitoring reference signal (RLM-RS) is not configured, uses one or more reference signals for an active transmission configuration indication (TCI) state associated with a lowest CORESET pool index for radio link monitoring, and a receiving section that receives the one or more reference signals.

### Advantageous Effects of Invention

According to one aspect of the present disclosure, a radio link can be appropriately monitored.

### Brief Description of Drawings

Figs. 1A to 1D illustrate one example of a multi-TRPs scenario.
Fig. 2 is a diagram illustrating an example of RLM-RS determination according to a first embodiment.
Fig. 3 is a diagram illustrating an example of RLM-RS determination according to a third embodiment.
Fig. 4 is a diagram illustrating an example of RLM-RS determination according to a fourth embodiment.
Fig. 5 is a diagram illustrating an example of RLM-RS determination according to a fifth embodiment.
Fig. 6 is a diagram illustrating an example of a schematic configuration of a radio communication system according to one embodiment.
Fig. 7 is a diagram illustrating an example of a configuration of a base station according to one embodiment.
Fig. 8 is a diagram illustrating an example of a configuration of a user terminal according to one embodiment.
Fig. 9 is a diagram illustrating an example of a hardware configuration of the base station and the user terminal according to one embodiment.

### Description of Embodiments

### (Multi-TRPs)

In NR, it is considered that one or a plurality of transmission/reception points (TRPs)(multi-TRPs) performs DL transmission to UE by using one or a plurality of panels (multi-panel) . It is also considered that UE performs UL transmission to one or a plurality of TRPs.

Note that the plurality of TRPs may correspond to the same cell identifier (ID), or may correspond to different cell IDs. The cell ID may be a physical cell ID or a virtual cell ID.

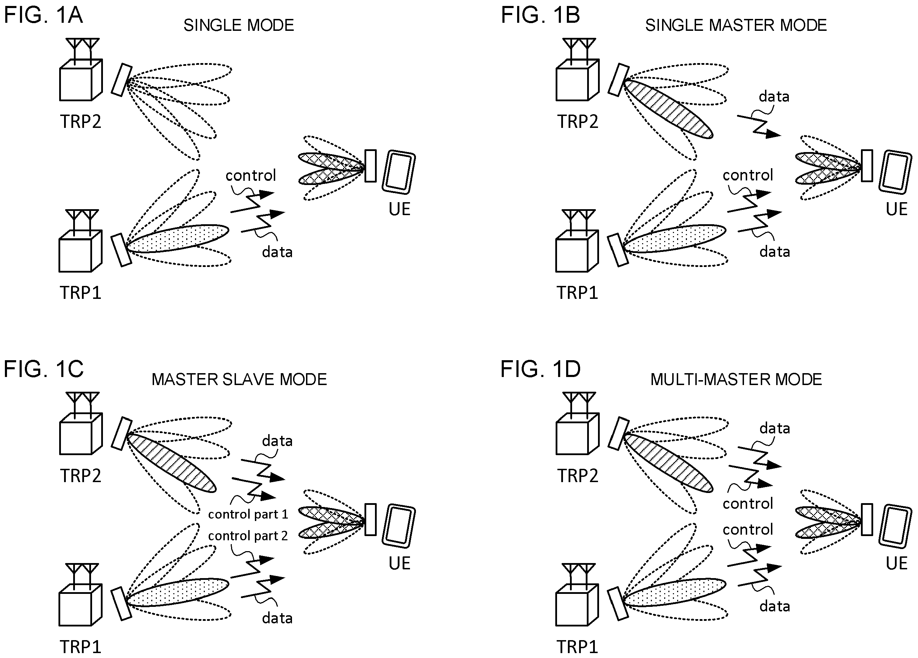

Figs. 1A to 1D illustrate one example of a multi-TRPs scenario. In these examples, it is assumed that each TRP is capable of transmitting four different beams, but is not limited to this.

Fig. 1A illustrates one example of a case where only a single TRP (TRP 1 in present example) of multi-TRPs performs transmission to UE (which may be referred to as single mode, single TRP, and the like). In this case, TRP1 transmits both a control signal (PDCCH) and a data signal (PDSCH) to the UE.

Fig. 1B illustrates one example of a case where only a single TRP (TRP 1 in present example) of the multi-TRPs transmits a control signal to the UE and the multi-TRPs transmit a data signal (which may be referred to as single master mode). The UE receives each PDSCH transmitted from the multi-TRPs based on one piece of downlink control information (DCI).

Fig. 1C illustrates one example of a case where each of the multi-TRPs transmits a part of a control signal to the UE and the multi-TRPs transmit a data signal (which may be referred to as master slave mode). The TRP 1 may transmit a part 1 of a control signal (DCI). The TRP 2 may transmit a part 2 of the control signal (DCI). The part 2 of the control signal may depend on the part 1. The UE receives each PDSCH transmitted from the multi-TRPs based on these parts of the DCI.

Fig. 1D illustrates one example of a case where each of the multi-TRPs transmits separate control signals to the UE and the multi-TRPs transmit a data signal (which may be referred to as multi-master mode). A first control signal (DCI) may be transmitted at the TRP 1, and a second control signal (DCI) may be transmitted at the TRP 2. The UE receives each PDSCH transmitted from the multi-TRPs based on the DCI.

When a plurality of PDSCHs (which may be referred to as multiple PDSCHs (multi-PDSCHs)) from the multi-TRPs as illustrated in Fig. 1B is scheduled by using one piece of DCI, the DCI may be referred to as single DCI (single PDCCH). When each of a plurality of PDSCHs from the multi-TRPs as illustrated in Fig. 1D is scheduled by using a plurality of pieces of DCI, the plurality of pieces of DCI may be referred to as multi-DCI (multiple PDCCHs (multi-PDCCHs)).

Such a multi-TRPs scenario can perform more flexible transmission control using a high-quality channel.

A different codeword (CW) and a different layer may be transmitted from each TRP of the multi-TRPs. Non-coherent joint transmission (NCJT) is considered as one form of multi-TRPs transmission.

In the NCJT, for example, the TRP 1 performs modulation mapping and layer mapping on a first codeword, performs first precoding in a first number of layers (e.g., two layers), and transmits a first PDSCH. The TRP 2 performs modulation mapping and layer mapping on a second codeword, performs second precoding in a second number of layers (e.g., two layers), and transmits a second PDSCH.

Note that a plurality of PDSCHs (multi-PDSCHs) subjected to the NCJT may be defined as partially or completely overlapping at least one of a time domain or a frequency domain. That is, the first PDSCH from a first TRP and the second PDSCH of a second TRP may overlap at least one of time resources or frequency resources.

The first PDSCH and the second PDSCH may be assumed not to be in quasi-co-located (QCL) relation (not to be quasi-co-location (QCL)). Reception of the multi-PDSCHs may be replaced with simultaneous reception of PDSCHs that are not of QCL type D.

As in the multi-master mode, in RRC configuration information for linking a plurality of PDCCH and PDSCH pairs having a plurality of TRPs, one control resource set (CORESET) in PDCCH configuration information (PDCCH-Config) may correspond to one TRP, to support intra-cell (having the same cell ID) and inter-cell (having different cell IDs) multi-TRPs transmission based on the plurality of PDCCHs.

In NR Rel. 15, the maximum number of CORESETs per PDCCH configuration information is three. In the operation of the plurality of TRPs based on the plurality of PDCCHs, the maximum number of CORESETs per PDCCH configuration information or BWP may be increased to 5 according to the UE capability.

### (TCI, QCL)

In the NR, it is considered to control reception processing (for example, at least one of reception, demapping, demodulation, and decoding) and transmission processing (for example, at least one of transmission, mapping, precoding, modulation, and coding) of at least one of a signal and a channel (expressed as a signal/channel) in the UE based on a transmission setting instruction state (Transmission Configuration Indication state (TCI state)).

The TCI state may represent that applied to downlink signals/channels. A TCI state applied to an uplink signal/channel may be expressed as a spatial relation.

The TCI state is information regarding quasi-co-location (QCL) of a signal/channel, and may be referred to as a spatial reception parameter, spatial relation information, or the like. The TCI state may be configured for the UE per channel or per signal.

QCL is an index indicating a statistical property of a signal/channel. For example, a case where one signal/channel and another signal/channel have a QCL relation may mean that it is possible to assume that at least one of Doppler shift, Doppler spread, an average delay, a delay spread, and a spatial parameter (for example, a spatial Rx parameter) is identical (in QCL with respect to at least one of these) between the plurality of different signals/channels.

Note that, the spatial Rx parameter may correspond to a reception beam of the UE (for example, a reception analog beam), and the beam may be specified on the basis of spatial QCL. The QCL (or at least one element of the QCL) in the present disclosure may be replaced with spatial QCL (sQCL).

A plurality of types (QCL types) of QCL may be defined. For example, four QCL types A to D with different parameters (or parameter sets) that can be assumed to be identical may be provided. These parameters (which may be referred to as QCL parameters) are as follows:
- QCL type A (QCL-A): Doppler shift, Doppler spread, average delay, and delay spread;
- QCL type B (QCL-B): Doppler shift and Doppler spread;
- QCL type C (QCL-C): Doppler shift and average delay; and
- QCL type D (QCL-D): spatial Rx parameter.

It may be referred to as a QCL assumption for the UE to assume that a certain control resource set (CORESET), channel, or reference signal has a specific QCL (for example, QCL type D) relation with another CORESET, channel, or reference signal.

The UE may determine at least one of a transmission beam (Tx beam) and a reception beam (Rx beam) of a signal/channel based on a TCI state of the signal/channel or the QCL assumption.

The TCI state may be, for example, information regarding the QCL of a target channel (In other words, a reference signal (Reference Signal (RS)) for the channel) and another signal (for example, another RS). The TCI state may be configured (indicated) by higher layer signaling, physical layer signaling, or a combination thereof.

In the present disclosure, higher layer signaling may be, for example, any of radio resource control (RRC) signaling, medium access control (MAC) signaling, broadcast information, and the like, or a combination thereof.

The MAC signaling may use, for example, a MAC control element (MAC CE), a MAC protocol data unit (PDU), or the like. The broadcast information may be, for example, a master information block (MIB), a system information block (SIB), minimum system information (Remaining Minimum System Information (RMSI)), other system information (OSI), or the like.

The physical layer signaling may be, for example, Downlink Control Information (DCI).

A channel for which a TCI state or spatial relation is configured (specified) may be, for example, at least one of a Physical Downlink Shared Channel (PDSCH), a Physical Downlink Control Channel (PDCCH), a Physical Uplink Shared Channel (PUSCH), and a Physical Uplink Control Channel (PUCCH).

Furthermore, an RS having a QCL relation with the channel may be, for example, at least one of a Synchronization Signal Block (SSB), a Channel State Information Reference Signal (CSI-RS)), a measurement reference signal (Sounding Reference Signal (SRS)), a tracking CSI-RS (also referred to as a Tracking Reference Signal (TRS)), and a QCL detection reference signal (also referred to as a QRS).

The SSB is a signal block including at least one of a primary synchronization signal (PSS), a secondary synchronization signal (SSS), and a broadcast channel (physical broadcast channel (PBCH)). The SSB may be referred to as an SS/PBCH block.

The UE may receive, by higher layer signaling, configuration information (for example, PDSCH-Config, tci-StatesToAddModList) including a list of information elements in a TCI state.

The information element ("TCI-state IE" of RRC) of the TCI state configured by the higher layer signaling may include a TCI state ID and one or more pieces of QCL information ("QCL-Info"). The QCL Information may include at least one of information regarding the RS having the QCL relation (RS related information) and information indicating a QCL type (QCL type information). The RS relation information may include information such as an index of an RS (for example, SSB index, Non-Zero Power CSI-RS (Non-Zero-Power (NZP) CSI-RS) Resource ID (Identifier)), an index of a cell in which the RS is located, and an index of a Bandwidth Part (BWP) in which the RS is located.

In Rel. 15 NR, as at least one TCI state of the PDCCH and the PDSCH, both the RS of QCL type A and the RS of QCL type D, or only the RS of QCL type A may be configured for the UE.

In a case where the TRS is configured as the RS of QCL type A, the TRS is different from the demodulation reference signal (DeModulation Reference Signal (DMRS)) of the PDCCH or the PDSCH, and it is assumed that the same TRS is periodically transmitted for a long time. The UE may measure the TRS and calculate an average delay, a delay spread, and the like.

The UE for which the TRS is configured as the RS of QCL type A in the TCI state of the DMRS of the PDCCH or the PDSCH can assume that parameters (an average delay, a delay spread, and the like) of QCL type A of the TRS are the same as the DMRS of the PDCCH or the PDSCH, and thus, can obtain the parameters (an average delay, a delay spread, and the like) of type A of the DMRS of the PDCCH or the PDSCH from the measurement result of the TRS. When performing channel estimation of at least one of the PDCCH and the PDSCH, the UE can perform channel estimation with higher accuracy using the measurement result of the TRS.

The UE configured with the RS of QCL type D may determine the UE reception beam (spatial domain reception filter, UE spatial domain reception filter) using the RS of QCL type D.

An RS of QCL type X in a TCI state may mean an RS in a QCL type X relation with (DMRS of) a certain channel/signal, and this RS may be referred to as a QCL source of QCL type X in the TCI state.

### <TCI state for PDCCH>

Information about the QCL between the PDCCH (or the DMRS antenna port associated with the PDCCH) and a certain RS may be referred to as a TCI state or the like for the PDCCH.

The UE may determine the TCI state for the UE specific PDCCH (CORESET) based on higher layer signaling. For example, for the UE, one or more (K) TCI states may be configured by RRC signaling for each CORESET.

The UE may cause one of the plurality of TCI states configured by RRC signaling to be activated by the MAC CE for each CORESET. The MAC CE may be referred to as a TCI state indication MAC CE for a UE specific PDCCH (TCI State Indication for UE-specific PDCCH MAC CE). The UE may monitor the CORESET based on an active TCI state corresponding to the CORESET.

### (RLM)

Radio link monitoring (RLM) is also used in NR.

In the NR, the base station may configure a radio link monitoring reference signal (Radio Link Monitoring RS (RLM-RS)) for each BWP for the UE by using higher layer signaling. The UE may receive configuration information (for example, the "RadioLinkMonitoringConfig" information element in RRC) for RLM.

The setting information for RLM may include failure detection resource setting information (for example, the higher layer parameter "failureDescriptionResourceToAddModList"). The failure detection resource setting information may include a parameter related to the RLM-RS (for example, the higher layer parameter "RadioLinkMonitoringRS").

The parameter related to the RLM-RS may include information indicating that the parameter corresponds to a purpose of the RLM, an index corresponding to a resource of the RLM-RS (for example, an index included in "failureDetectionResources" of the higher layer parameter), and the like. The index may be, for example, an index of a setting of a CSI-RS resource (for example, a non-zero power CSI-RS resource ID) or an SS/PBCH block index (SSB index).

The UE may specify the RLM-RS resource based on the index corresponding to the resource of the RLM-RS and perform RLM using the RLM-RS resource.

If the UE is not provided with a RadioLinkMonitoringRS (RLM-RS) and the UE is provided with a TCI state including one or more CSI-RSs for PDCCH reception, the UE may perform the following operations.
- If the active TCI state for PDCCH reception includes only one RS, the UE uses the RS provided for the TCI state for the active TCI state for the PDCCH reception for RLM
- If the active TCI state for PDCCH reception includes two RSs, the UE expects that one RS has QCL type D and the UE uses the RS with QCL type D for RLM The UE does not expect that both RSs have QCL type D.
- The UE is not required to use aperiodic or semi-persistent RS for RLM
- For Lₘₐₓ (maximum number of candidates of SS/PBCH block per half-frame) = 4, the UE selects, according to the order of the search space set from the shortest monitoring periodicity, the N_{RLM} RSs provided for the active TCI state for PDCCH reception in the CORESET associated with the search space set. If more than one CORESET is associated with the search space set with the same monitoring periodicity, the UE determines the order of the CORESET from the highest CORESET index. The UE may select the N_{RLM} RSs according to the order of the CORESET.

If the UE is not provided with the RadioLinkMonitoringRS, the UE does not necessarily expect that more than N_{RLM} RadioLinkMonitoringRS are used for RLM.

When Lₘₐₓ = 4, N_{RLM} = 2 may be satisfied. When Lₘₐₓ = 8, N_{RLM} = 4 may be satisfied. When Lₘₐₓ = 64, N_{RLM} = 8 may be satisfied.

If the UE is not provided with reference signal (RS) information for RLM (for example, RadiolinkMonitoringRS), the UE determines the RLM-RS based on the TCI state for the PDCCH. The number of RLM-RSs should be less than or equal to N_{RLM}.

In Rel. 16, up to 5 CORESETs are configured for multi-TRPs transmission (the above-described multi-master mode) based on a plurality of PDCCHs. A CORESET pool index (CORESETPoolIndex) is configured for each CORESET.

If the UE is not provided with the information of the RS for RLM (if the UE is not explicitly notified of the information of the RS for RLM), the following a first and second problems are considered for how the UE determines the RLM-RS:

### <First Problem>

NR Rel. 15 merely specifies an RLM-RS determination (narrowing down) rule (UE operation) for a case where Lₘₐₓ is four when N_{RLM} is two and the maximum number of CORESETs is three. In Rel. 16, the maximum number of CORESET is five, whereas the RLM-RS determination rule for the case of Lₘₐₓ = 4 and N_{RLM} = 2 and the case of Lₘₐₓ = 8 and N_{RLM} = 4 is not clear.

### <Second Problem>

In NR Rel. 15, the UE determines a CORESET with a TCI state used for RLM-RS based on the following two factors.
- Monitoring periodicity of search space associated with CORESET (in order from shortest monitoring periodicity)
- CORESET ID (if there are more than one CORESET corresponding to a same monitoring periodicity, a highest CORESET ID is listed first)

However, information about TRPs is not considered in the RLM-RS determination. The RLM-RS determined by the UE based on the rule of NR Rel. 15 may be randomly selected from the two TRPs if it corresponds to only one of the TRPs. In some cases, this is not valid for multiple PDSCH transmission based on multiple PDCCHs in a multi-TRPs scenario.

If the method for determining RLM-RS is not clear, RLM is not appropriately performed, and system performance may be deteriorated.

Therefore, the present inventors have conceived a method for determining an RLM-RS when the UE is not provided with the RLM-RS (when the UE is not explicitly configured with the RLM-RS by RRC signaling).

Hereinafter, embodiments according to the present disclosure will be described in detail with reference to the drawings. The radio communication method according to each of the embodiments may be applied independently, or may be applied in combination with others.

In the present disclosure, "A/B" and "at least one of A or B" may be interchangeable. In the present disclosure, a cell, a CC, a carrier, a BWP, and a band may be interchangeable. In the present disclosure, an index, an ID, an indicator, and a resource ID may be interchangeable. In the present disclosure, an RRC parameter, a higher layer parameter, an RRC information element (IE), and an RRC message may be replaced with each other.

### (Radio communication method)

In the present disclosure, the UE in which the plurality of TRPs are configured may determine at least one of the TRP corresponding to the DCI, the TRP corresponding to the PDSCH or the UL transmission (PUCCH, PUSCH, SRS, or the like) scheduled by the DCI, or the like, on the basis of at least one of the following.
• A value of a predetermined field (for example, a field for specifying the TRP, an antenna port field, and PRI) included in the DCI.
• DMRS (for example, a sequence of the DMRS, a resource, a CDM group, a DMRS port, a DMRS port group, an antenna port group, or the like) corresponding to the scheduled PDSCH/PUSCH.
• DMRS (for example, a sequence of the DMRS, a resource, a CDM group, a DMRS port, a DMRS port group, or the like) corresponding to the PDCCH on which the DCI is sent.
• CORESET (for example, a CORESET pool ID of the CORESET, an ID of the CORESET, a scramble ID (which may be replaced with a sequence ID), a resource, and the like) receiving DCI
• RS (such as RS-related group) used for the TCI state, the QCL assumption, the spatial relation information, and the like.

In the present disclosure, a single PDCCH (DCI) may be referred to as a PDCCH (DCI) of a first scheduling type (for example, scheduling type A (or type 1)). Further, multi-PDCCHs (DCI) may be referred to as a PDCCH (DCI) of a second scheduling type (for example, scheduling type B (or type 2)).

In the present disclosure, the single PDCCH may be assumed to be supported in the case where multi-TRPs use ideal backhaul. The multi-PDCCHs may be assumed to be supported in the case where the multi-TRPs uses non-ideal backhaul.

Note that the ideal backhaul may be referred to as a DMRS port group type 1, a reference signal related group type 1, an antenna port group type 1, a CORESET pool type 1, and the like. Note that the non-ideal backhaul may be referred to as a DMRS port group type 2, a reference signal related group type 2, an antenna port group type 2, a CORESET pool type 2, and the like. The name is not limited thereto.

In the present disclosure, the term of TRP can be used interchangeably with a panel. The TRP-related ID may correspond to at least one of a TRP and a panel. In the present disclosure, a TRP-related ID, a TRP ID, a panel ID, a CORESET pool ID for a CORESET of a PDCCH from the TRP or the panel, a CORESET ID indicating the CORESET of the PDCCH from the TRP or the panel, and another index (such as a DMRS port group ID) corresponding to the TRP or the panel may be mutually replaced with each other.

In the present disclosure, lowest, highest, minimum, and maximum may be replaced with each other. In the present disclosure, shortest, longest, minimum, and maximum may be replaced with each other.

### <First Embodiment>

An operation when the UE does not configure the CORESET pool index and an operation when the UE configures the CORESET pool index may be defined.

If the UE is not provided with a RadioLinkMonitoringRS (RLM-RS) and the UE is provided with a TCI state including one or more CSI-RSs for PDCCH reception, the UE may perform the following operations.
- If the active TCI state for PDCCH reception includes only one RS, the UE uses the RS provided for the TCI state for the active TCI state for the PDCCH reception for RLM
- If the active TCI state for PDCCH reception includes two RSs, the UE expects that one RS has QCL type D and the UE uses the RS with QCL type D for RLM The UE does not expect that both RSs have QCL type D.
- The UE is not required to use aperiodic or semi-persistent RS for RLM
- For Lₘₐₓ (maximum number of candidates of SS/PBCH block per half-frame) = 4, the UE selects, according to the order of the search space set from the shortest monitoring periodicity (ascending order of monitoring periodicity), the N_{RLM} RSs provided for the active TCI state for PDCCH reception in the CORESET associated with the search space set. If more than one CORESET is associated with the search space set with the same monitoring periodicity, the UE determines the order of the CORESET from the highest CORESET index (descending order of CORESET index). The UE may select the N_{RLM} RSs according to the order of the CORESET.

If it is configured by the PDCCH configuration information (higher layer parameter PDCCH-Config) that includes two different values of the CORESET pool index (CORESETPoolIndex) in the CORESET information (ControlResourceSet), and the UE is not provided with the RLM-RS information (RadioLinkMonitoringRS) and the UE is provided with a TCI state that includes one or more CSI-RSs for PDCCH reception, the UE may perform the following operations.
- If the active TCI state for PDCCH reception includes only one RS, the UE uses the RS provided for the TCI state for the active TCI state for the PDCCH reception in the CORESET associated with the lowest CORESET pool index for RLM
- If the active TCI state for PDCCH reception in the CORESET associated with the lowest CORESET pool index includes two RSs, the UE expects that one RS has QCL type D and the UE uses the RS with QCL type D for RLM The UE does not expect that both RSs have QCL type D.
- The UE is not required to use aperiodic or semi-persistent RS for RLM
- For Lₘₐₓ = 4, the UE selects, according to the order of the search space set from the shortest monitoring periodicity, the N_{RLM} RSs provided for the active TCI state for PDCCH reception in the CORESET that is associated with the lowest CORESET pool index and associated with the search space set. If more than one CORESET associated with the lowest CORESET pool index is associated with the search space set with the same monitoring periodicity, the UE determines the order of the CORESET from the highest CORESET index. The UE may select the N_{RLM} RSs according to the order of the CORESET.

In the present disclosure, the PDCCH configuration information (PDCCH-Config) and the CORESET list (contolResourceSetToAddModList) may be replaced with each other. In the present disclosure, PDCCH configuration information including two different values of a CORESET pool index in CORESET information, PDCCH configuration information including two different values of a CORESET pool index, two pieces of CORESET information respectively including two different values of a CORESET pool index, and PDCCH configuration information including two pieces of CORESET information respectively including two different values of a CORESET pool index may be replaced with each other.

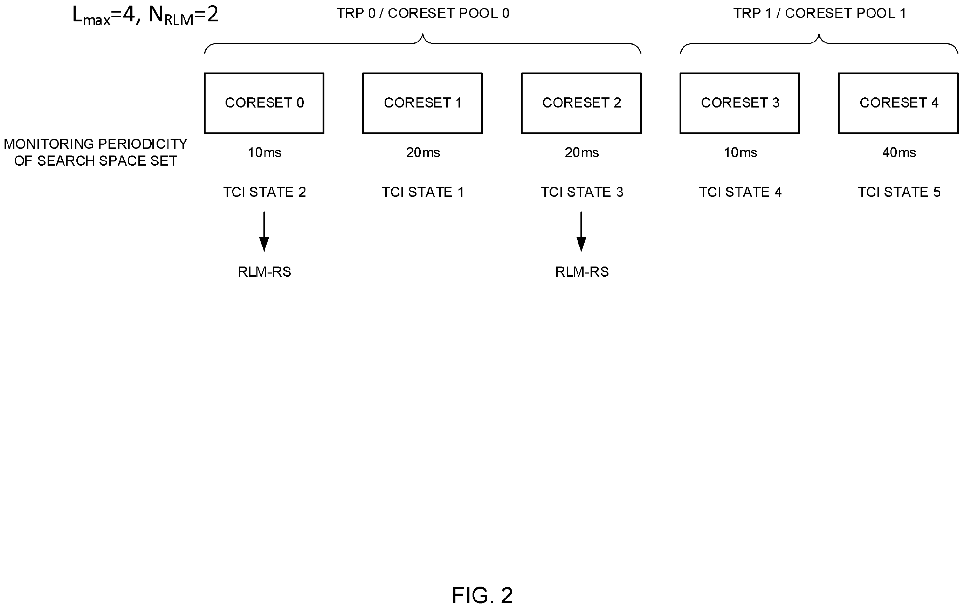

In the example of Fig. 2, a CORESET pool 0 with a CORESET pool index of 0 corresponds to TRP0 and includes CORESETs 0, 1, and 2. A CORESET pool 1 with a CORESET pool index of 1 corresponds to TRP1 and includes CORESETs 3 and 4. Monitoring periodicities of search space sets associated with CORESETs 0, 1, 2, 3, and 4 are 10, 20, 20, 10, and 40 ms, respectively. Active TCI states of the PDCCH in CORESETs 0, 1, 2, 3, and 4 are TCI states 2, 1, 3, 4, and 5, respectively.

In this example, Lₘₐₓ = 4 and N_{RLM} = 2.

Because the CORESET pool 0 has the lowest CORESET pool index, the UE selects, according to the order of the monitoring periodicity, the TCI state 2 for the PDCCH in the CORESET 0 associated with the search space set having the shortest monitoring periodicity 10 ms, among the CORESETs in the CORESET pool 0. Since the CORESETs 1 and 2 in the CORESET pool 0 are associated with the search space sets with the same monitoring periodicity 20 ms, the UE selects the TCI state 3 for PDCCH in the CORESET 2 according to the order from the highest CORESET index. By this operation, the UE determines the selected RSs of TCI states 2 and 3 as N_{RLM} (2) RLM-RSs.

According to the first embodiment described above, the UE can appropriately select the RLM-RS even when the CORESET pool index is configured. In addition, the UE can appropriately select the RLM-RS even when the CORESET pool index is not configured, and can ensure compatibility with Rel. 15.

### <Second Embodiment>

The UE does not necessarily expect that the CORESET pool index is not configured (provided).

If the UE is not provided with RadioLinkMonitoringRS (RLM-RS) information and the UE is provided with a TCI state including one or more CSI-RSs for PDCCH reception, the UE may perform the following operations.
- If the active TCI state for PDCCH reception includes only one RS, the UE uses the RS provided for the TCI state for the active TCI state for the PDCCH reception in the CORESET associated with the lowest CORESET pool index for RLM
- If the active TCI state for PDCCH reception in the CORESET associated with the lowest CORESET pool index includes two RSs, the UE expects that one RS has QCL type D and the UE uses the RS with QCL type D for RLM The UE does not expect that both RSs have QCL type D.
- The UE is not required to use aperiodic or semi-persistent RS for RLM
- For Lₘₐₓ = 4, the UE selects, according to the order of the search space set from the shortest monitoring periodicity, the N_{RLM} RSs provided for the active TCI state for PDCCH reception in the CORESET that is associated with the lowest CORESET pool index and associated with the search space set. If more than one CORESET associated with the lowest CORESET pool index is associated with the search space set with the same monitoring periodicity, the UE determines the order of the CORESET from the highest CORESET index. The UE may select the N_{RLM} RSs according to the order of the CORESET.

According to the second embodiment described above, the UE can appropriately select the RLM-RS, expecting that the CORESET pool index is configured.

### <Third Embodiment>

If the UE is not provided with RLM-RSs (if not explicitly configured by RRC signaling), the UE may select N_{RLM} RLM-RSs according to an RLM-RS determination rule in NR Rel. 15. In this case, the UE may determine the RS in the TCI state associated with at least one TRP as the RLM-RS.

The UE may select N_{RLM} RSs corresponding to Lₘₐₓ greater than four, such as Lₘₐₓ = 8 or Lₘₐₓ = 64, similar to the RLM-RS determination rule when Lₘₐₓ = 4.

The RLM-RS determination rule may be one of the following Rules 1 -1 to 1 -4.

### << Rule 1 -1>> (Similar to RLM-RS determination rule of NR Rel. 15)

The UE may select, according to the order of the search space set from the shortest monitoring periodicity, the N_{RLM} RSs provided for the active TCI state for PDCCH reception in the CORESET associated with the search space set. If more than one CORESET is associated with the search space set with the same monitoring periodicity, the UE may determine the order of the CORESET from the highest CORESET index.

### <<Rule 1-2>>

The UE may select, according to the order of the search space set from the shortest monitoring periodicity, the N_{RLM} RSs provided for the active TCI state for PDCCH reception in the CORESET associated with the search space set. If more than one CORESET is associated with the search space set with the same monitoring periodicity, the UE may determine the order of the CORESET from the lowest CORESET index.

### <<Rule 1-3>>

The UE may select, according to the order of the search space set from the longest monitoring periodicity, the N_{RLM} RSs provided for the active TCI state for PDCCH reception in the CORESET associated with the search space set. If more than one CORESET is associated with the search space set with the same monitoring periodicity, the UE may determine the order of the CORESET from the highest CORESET index.

### <<Rule 1-4>>

The UE may select, according to the order of the search space set from the longest monitoring periodicity, the N_{RLM} RSs provided for the active TCI state for PDCCH reception in the CORESET associated with the search space set. If more than one CORESET is associated with the search space set with the same monitoring periodicity, the UE may determine the order of the CORESET from the lowest CORESET index.

When selecting in order from the longest monitoring periodicity (Rule 1 -3, 1 -4), if a failure frequently occurs on the PDCCH having the longest monitoring periodicity, the RLM can reduce the failure.

When selecting in order from the lowest CORESET ID (Rule 1 -2, 1 -4), a specific CORESET such as CORESETO can be preferentially selected.

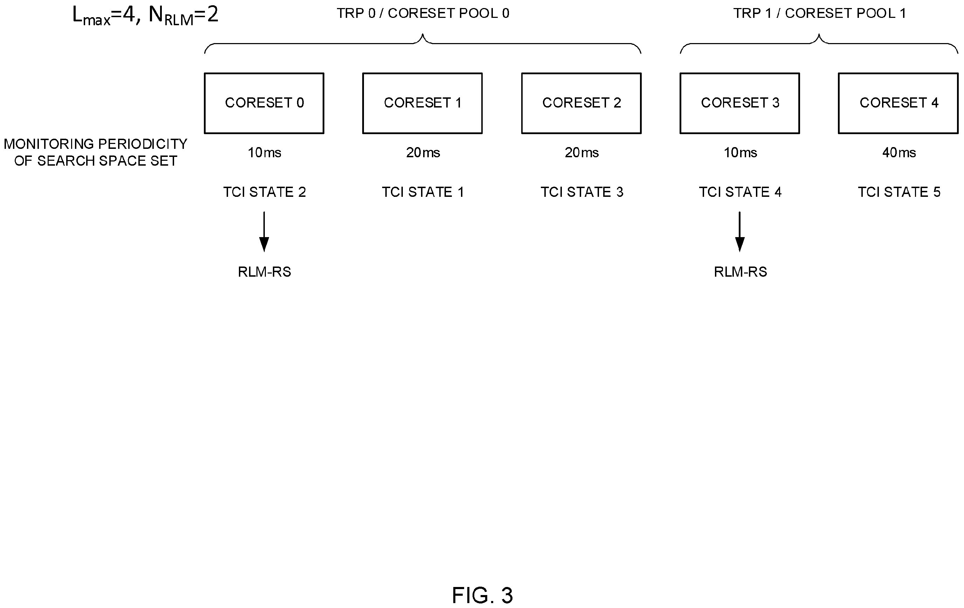

In the example of Fig. 3, the configurations of the TRP, the CORESET pool, the CORESET, the monitoring periodicity of the search space set, and the TCI state are similar to those in Fig. 2.

In this example, Lₘₐₓ = 4 and N_{RLM} = 2, and the UE uses Rule 1-1.

The UE selects, in the order of the monitoring periodicity, the TCI states 2 and 4 for the PDCCH in the CORESETs 0 and 3 associated with the search space set having the shortest monitoring periodicity 10 ms, among the CORESETs in all of the CORESET pools. By this operation, the UE determines the selected RSs of TCI states 2 and 4 as N_{RLM} (2) RLM-RSs.

According to the third embodiment described above, the UE can determine the RLM-RS even in the case of Lₘₐₓ = 8 and N_{RLM} = 4.

### <Fourth Embodiment>

A limitation of using the active TCI state for PDCCH reception in the CORESET with the lowest or highest TRP-related ID may be added to the RLM-RS determination rule of any of NR Rel. 15, and the first to third embodiments.

The PDCCH configuration information (for example, PDCCH-Config) may include CORESET information (for example, controlResourceSet) and search space information (for example, searchSpace). The CORESET information may include a CORESET ID (index, e.g. controlResourceSetId) and a CORESET pool index. The CORESET pool index (CORESET group ID) may be an ID corresponding to at least one of a PDSCH, a codeword, a DMRS port group, a panel, and a TRP.

If the UE is not provided with RadioLinkMonitoringRS and the UE is provided with a TCI state including one or more CSI-RSs for PDCCH in the CORESET with the lowest or highest TRP-related ID:
- If the active TCI state for PDCCH reception in the CORESET with the lowest or highest TRP-related ID includes only one RS, the UE may use the RS provided for the TCI state for the active TCI state for the PDCCH for RLM
- If the active TCI state for PDCCH reception in the CORESET with the lowest or highest TRP-related ID includes two RSs, the UE expects that one RS has QCL type D, the UE uses a RS with QCL type D for RLM, and the UE does not expect that both of RSs include QCL type D
- The UE is not necessarily required to use aperiodic or semi-persistent RS for RLM
- For Lₘₐₓ = 4, the UE may select, according to the order from the shortest monitoring periodicity of the search space set among CORESETs with the lowest or highest TRP-related ID, the N_{RLM} RSs provided for the active TCI state for PDCCH reception in the CORESET associated with the search space set If more than one CORESET is associated with the search space set with the same monitoring periodicity, the UE may determine the order of the CORESET from the highest CORESET index.

If the UE is not provided with the RadioLinkMonitoringRS, the UE does not necessarily expect that more than N_{RLM} RadioLinkMonitoringRS are used for RLM.

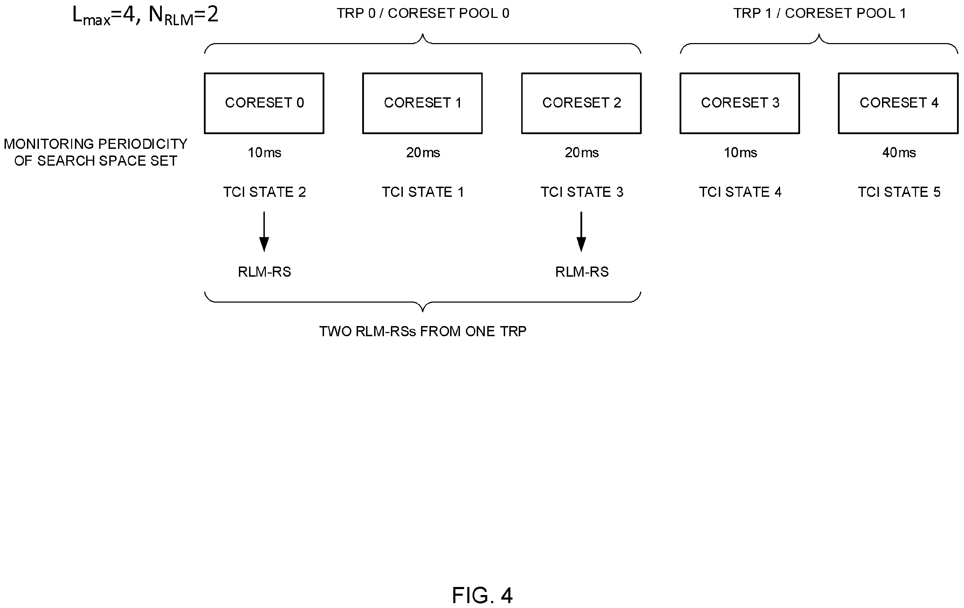

In the example of Fig. 4, the configurations of the TRP, the CORESET pool, the CORESET, the monitoring periodicity of the search space set, and the TCI state are similar to those in Fig. 2.

In this example, Lₘₐₓ = 4 and N_{RLM} = 2, and the UE uses Rule 1-1. In this example, the TRP-related ID is a CORESET pool index.

In this example, a limitation on the RLM-RS determination rule is that the PDCCH is a PDCCH in a CORESET with the lowest CORESET pool ID. In this example, the UE restricts the RLM-RS to an active TCI state for the PDCCH in the CORESET in CORESET pool 0 (TRP0).

The UE selects, in the monitoring periodicity order, the TCI state 2 for the PDCCH in CORESETO associated with the search space set with the shortest monitoring periodicity of 10 ms in the CORESET with the lowest CORESET pool ID, and selects the TCI state 3 for the PDCCH in CORESET2 with the highest CORESET index in the two CORESETs associated with the search space set with the second shortest monitoring periodicity of 20 ms. By this operation, the UE determines RSs in TCI states 2 and 3 as N_{RLM} (two) RLM-RSs from CORESET pool 0 corresponding to one TRP.

In NR Rel. 15, since the UE has an RRC connection to one TRP, the RLM-RS is associated only with this TRP. According to the fourth embodiment, since a plurality of RLM-RSs associated with a specific TRP (TRP in connection, or default TRP) is selected, RLM for the specific TRP can be reliably performed.

### <Fifth Embodiment>

For the RLM-RS determination rule of any of NR Rel. 15, and the first to third embodiments, an extension may be added that the UE uses two RSs respectively provided in the active TCI state for PDCCH reception in the CORESET with two TRP-related IDs as the RLM-RS.

### <<Step 1>>

The UE may use at least two RSs for RLM-RSs from the active TCI state for PDCCH reception from different TRP-related IDs. The UE may select the RLM-RS using any RLM-RS determination rule of NR Rel. 15, the first to third embodiments, within each TRP-related ID.

### <<Step 2>>

After the UE determines the at least two RLM-RSs from the different TRP-related IDs, the UE may determine the remaining RLM-RSs based on one of the following steps 2 -1 and 2 -2.

### <<Step 2-1>>

The UE may determine the remaining RLM-RSs based on any RLM-RS determination rule of NR Rel. 15, and the first to third embodiments.

### <<Step 2-2>>

The UE may determine the remaining RLM-RSs in the order from two TRPs or different TRP-related IDs. The UE may determine the RLM-RSs based on any RLM-RS determination rule of NR Rel. 15, and the first to third embodiments, within each TRP-related ID.

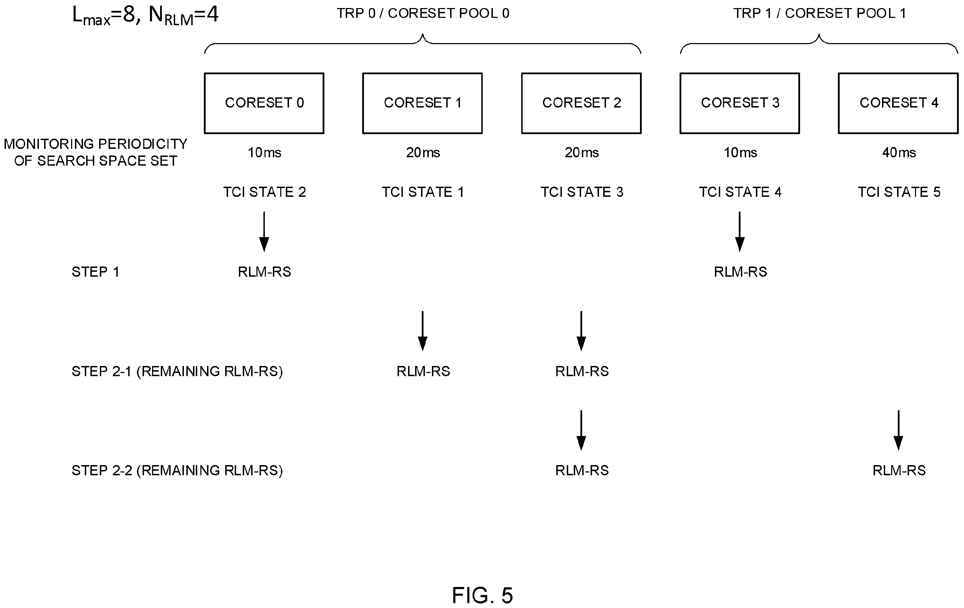

In the example of Fig. 5, the configurations of the TRP, the CORESET pool, the CORESET, the monitoring periodicity of the search space set, and the TCI state are similar to those in Fig. 2.

In this example, Lₘₐₓ = 8 and N_{RLM} = 4, and the UE uses Rule 1-1. In this example, the TRP-related ID is a CORESET pool index.

In Step 1, the UE determines the RLM-RS from each of the different CORESET pools based on Rule 1 -1. In this example, the UE selects TCI state 2 for PDCCH in CORESETO associated with the search space set with the shortest monitoring periodicity 10 ms in CORESET pool 0 as the RLM-RS, and selects TCI state 4 for PDCCH in CORESET3 associated with the search space set with the shortest monitoring periodicity 10 ms in CORESET pool 1 as the RLM-RS. By this operation, the UE selects two RLM-RSs among the N_{RLM} (four) RLM-RSs, and selects the remaining two RLM-RSs in step 2.

Using Step 2-1, the UE determines the remaining RLM-RS based on Rule 1-1. In this example, the UE selects TCI states 3 and 1 for PDCCH in the CORESET as RLM-RS, starting from CORESET having the highest CORESET ID out of CORESETs 1 and 2 associated with the search space set with the next monitoring periodicity 20 ms in CORESET pool 0.

Using Step 2-2, the UE determines the RLM-RS from each of the different CORESET pools based on Rule 1 -1. In this example, the UE selects TCI state 3 for PDCCH in CORESET having the highest CORESET ID our of CORESETs 1 and 2 associated with the search space set with the second shortest monitoring periodicity 20 ms in CORESET pool 0 as the RLM-RS, and selects TCI state 5 for PDCCH in CORESET4 associated with the search space set with the second shortest monitoring periodicity 40 ms in CORESET pool 1 as the RLM-RS.

According to the fifth embodiment described above, when a UE needs to monitor PDCCHs from two TRPs, because an RLM-RS includes RSs from the two TRPs, the UE can reliably perform RLM on the two TRPs. For example, in a case where two TRPs are switched, a radio link with the two TRPs can be maintained.

### <Sixth Embodiment>

The UE may report UE capability information to the network, including information about at least one of the following:
- whether to support at least one RLM-RS selection operation in the foregoing embodiments
- the number of RLM-RSs supported by the RLM-RS selection operation (maximum number) The number of RLM-RSs may be at least one of the number per BWP, the number per CC, the number per band, and the number per UE.
- the number of CORESET pool indices supported for the RLM-RS selection operation (maximum number) The number of CORESET pool indices may be at least one of the number per BWP, the number per CC, the number per band, and the number per UE.
- the number of CORESETs supported for the RLM-RS selection operation (maximum number) The number of CORESETs may be at least one of the number per BWP, the number per CC, the number per band, and the number per UE.
- whether or not to support simultaneous reception of a plurality of pieces of DCI (multi-DCI, multi-PDCCH) (for example, whether or not to allow detection of two or more DCI formats of a plurality of PDCCHs in which the first symbol received is the same symbol in the same slot)
- whether or not to support simultaneous reception of multiple DCIs that are not in a specific QCL relationship (for example, not QCL type D)
- whether or not to support NCJT of PDSCH (in other words, simultaneous reception of a plurality of PDSCHs (codewords) that are not in a specific QCL relationship (for example, not QCL type D))
- whether or not to support Single DCI
- whether or not to support multi-DCI
- the number of DCI that the UE can detect (or decode) in a given PDCCH monitoring period or in the same symbol (for example, OFDM symbol)
- the number of DCI that are not in a particular QCL relationship (for example, not QCL type D) that the UE can detect (or decode) in a given PDCCH monitoring period or in the same symbols (for example, OFDM symbols)
- the number of PDSCHs (or codewords) that the UE can detect (or decode) in the same symbol (for example, OFDM symbol)
- the number of PDSCHs (or codewords) that are not in a particular QCL relationship (for example, not QCL type D) that the UE can detect (or decode) in the same symbols (for example, OFDM symbols)
- The number or maximum number of RLM-RSs selected by the UE when no RLM-RS is provided

When reporting at least one of the above-described UE capabilities, the UE may assume that at least one of the above-described embodiments is applied (or configured to be applied). The network may notify the UE that has reported at least one of the above-described UE capabilities of information enabling operation based on at least one of the above-described embodiments.

It may be assumed that the UE selects the RLM-RS by using a value within the value (number) reported by the UE capability information.

According to the sixth embodiment described above, the UE can appropriately select the RLM-RS according to the capability.

### <Other Embodiments>

In each of the above embodiments, at least one of the following may be applied.

The operation in each embodiment may be applied only in a specific frequency range (for example, other than Frequency Range 2 (FR2) and FR1). Such an operation can reduce complexity of the UE.

The UE may assume that the number of RLM-RS N_{RLM} is not greater than the number of CORESETs.

If N_{RLM} is greater than the number of CORESETs, the UE may determine the RLM-RS up to the number of active TCI states by using the number of active TCI states (the number of TCI states activated by the MAC CE) instead of N_{RLM}. It is contemplated that the number of active TCI states is greater than the number of CORESETs.

The UE may use different RLM-RS determination rule between a case of using a single TRP and a case of using multi-TRPs.

The UE may change the RLM-RS determination rule based on at least one of RRC signaling, MAC CE, or DCI. For example, the RLM-RS determination rule may be different between a case where at least one condition is satisfied and a case where the condition is not satisfied among cases including a case where DCI for scheduling a PDSCH is received, a case where PDSCH from a plurality of TRPs is simultaneously received, and a case where the UE has a TCI state for each TRP.

### (Radio Communication System)

Hereinafter, a configuration of a radio communication system according to one embodiment of the present disclosure will be described. In this radio communication system, communication is performed using one or a combination of the radio communication methods according to the herein-contained embodiments of the present disclosure.

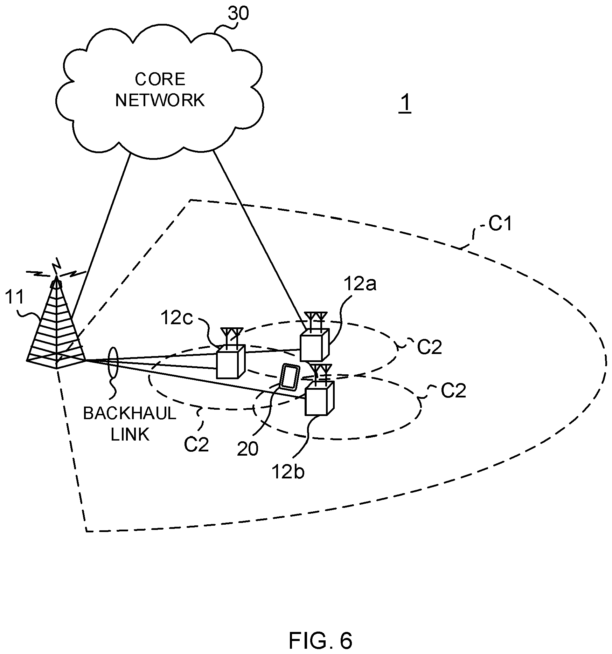

Fig. 6 is a diagram illustrating an example of a schematic configuration of a radio communication system according to one embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are arranged in the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10", unless these are distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency range (frequency range 1 (FR1)) and a second frequency range (frequency range 2 (FR2)). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency ranges, definitions, and the like of the FR1 and FR2 are not limited thereto, and, for example, FR1 may correspond to a frequency range higher than FR2.

Further, the user terminal 20 may perform communication on each CC using at least one of time division duplex (TDD) and frequency division duplex (FDD).

The plurality of base stations 10 may be connected to each other in a wired manner (for example, an optical fiber, an X2 interface, or the like in compliance with common public radio interface (CPRI)) or in a wireless manner (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), and the like.

The user terminal 20 may be a terminal corresponding to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that, in the radio communication system 1, another radio access method (for example, another single carrier transmission method or another multi-carrier transmission method) may be used as the UL and DL radio access methods.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), and the like may be used as downlink channels.

In the radio communication system 1, an uplink shared channel (physical uplink shared channel (PUSCH)) shared by the user terminals 20, an uplink control channel (physical uplink control channel (PUCCH)), a random access channel (physical random access channel (PRACH)), and the like may be used as uplink channels.

User data, higher layer control information, a system information block (SIB), and the like are transmitted on the PDSCH. User data, higher layer control information, and the like may be transmitted on the PUSCH. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH and the PUSCH.

Note that, the DCI for scheduling the PDSCH may be referred to as DL assignment, DL DCI, or the like, and the DCI for scheduling the PUSCH may be referred to as UL grant, UL DCI, or the like. Note that, the PDSCH may be replaced with DL data, and the PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. The UE may monitor the CORESET associated with a certain search space on the basis of search space configuration.

One search space may correspond to a PDCCH candidate corresponding to one or more aggregation levels. One or more search spaces may be referred to as a search space set. Note that the terms "search space", "search space set", "search space configuration", "search space set configuration", "CORESET", "CORESET configuration", and the like in the present disclosure may be replaced with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), and scheduling request (SR) may be transmitted on the PUCCH. A random access preamble for establishing connection with a cell may be transmitted on the PRACH.

Note that, in the present disclosure, downlink, uplink, and the like may be expressed without "link". Furthermore, various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) and a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, DMRSs may be referred to as "user terminal-specific reference signals (UE-specific Reference Signals)".

### (Base Station)

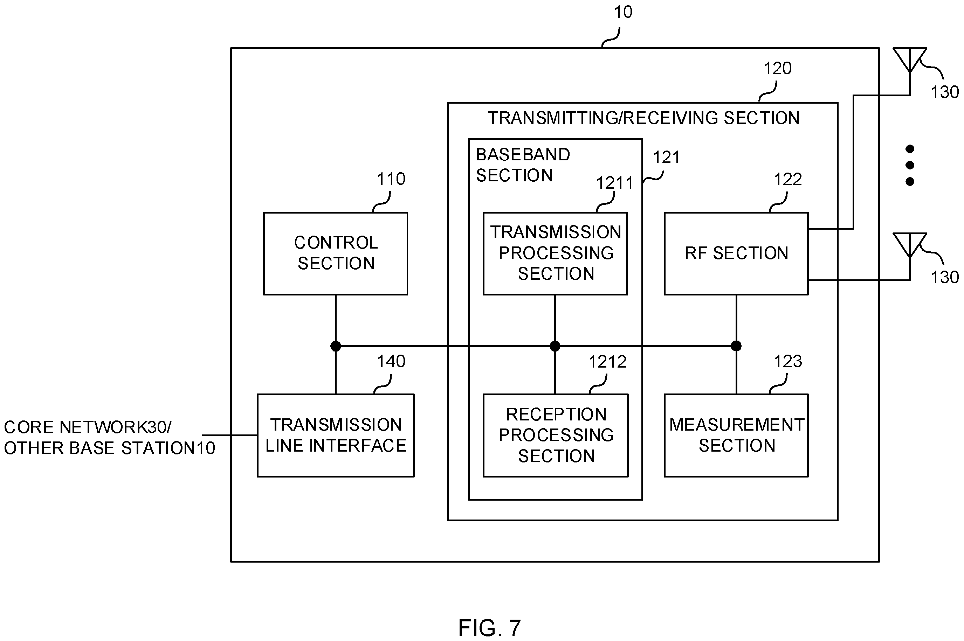

Fig. 7 is a diagram illustrating an example of a configuration of a base station according to one embodiment. The base station 10 includes a control section 110, a transmitting/receiving section 120, a transmitting/receiving antenna 130, and a transmission line interface 140. Note that one or more control sections 110, one or more transmitting/receiving sections 120, one or more transmitting/receiving antennas 130, and one or more transmission line interfaces 140 may be provided.

Note that, although this example mainly describes functional blocks of a characteristic part of the present embodiment, it may be assumed that the base station 10 includes other functional blocks that are necessary for radio communication as well. A part of processing performed by each section described below may be omitted.

The control section 110 controls the entire base station 10. The control section 110 can include a controller, a control circuit, and the like, which are described on the basis of common recognition in the technical field related to the present disclosure.

The control section 110 may control signal generation, scheduling (for example, resource allocation or mapping), and the like. The control section 110 may control transmission/reception, measurement, and the like using the transmitting/receiving section 120, the transmitting/receiving antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, state management of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 120 may be configured as an integrated transmitting/receiving section, or may include a transmitting section and a receiving section. The transmitting section may include the transmission processing section 1211 and the RF section 122. The receiving section may include the reception processing section 1212, the RF section 122, and the measurement section 123.

The transmitting/receiving antenna 130 can include an antenna, which is described on the basis of common recognition in the technical field related to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam and a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency range, filtering processing, amplification, and the like on the baseband signal, and may transmit a signal in the radio frequency range via the transmitting/receiving antenna 130.

Meanwhile, the transmitting/receiving section 120 (RF section 122) may perform amplification, filtering processing, demodulation to a baseband signal, and the like on the signal in the radio frequency range received by the transmitting/receiving antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM), channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may perform transmission/reception of a signal (backhaul signaling) to/from an apparatus included in the core network 30, another base station 10, or the like, and may perform acquisition, transmission, or the like of user data (user plane data), control plane data, and the like for the user terminal 20.

Note that, the transmitting section and the receiving section of the base station 10 in the present disclosure may include at least one of the transmitting/receiving section 120, the transmitting/receiving antenna 130, and the transmission line interface 140.

When two or more different control resource set (CORESET) pool indices are configured to a terminal and a radio link monitoring reference signal (RLM-RS) is not configured to a terminal, the control section 110 may use one or more reference signals for an active transmission configuration indication (TCI) state associated with a lowest CORESET pool index for radio link monitoring. The transmitting/receiving section 120 may transmit the one or more reference signals.

### (User Terminal)

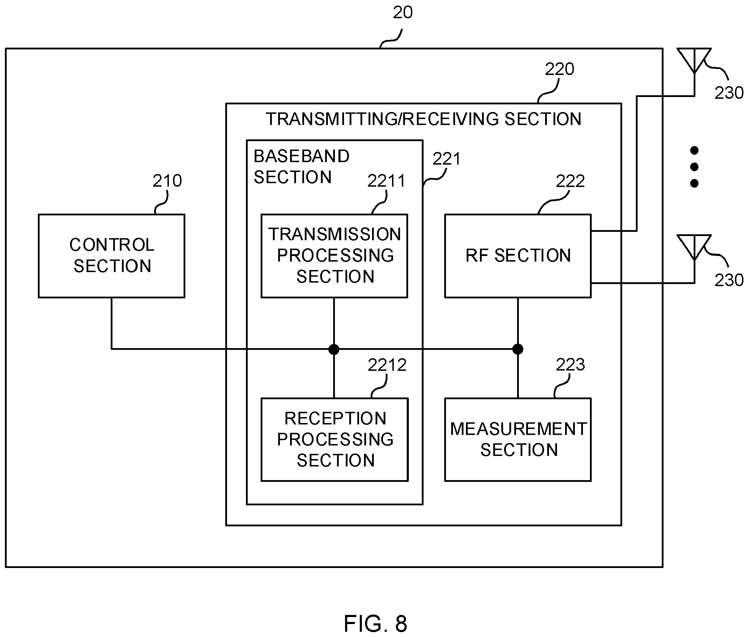

Fig. 8 is a diagram illustrating an example of a configuration of a user terminal according to one embodiment. The user terminal 20 includes a control section 210, a transmitting/receiving section 220, and a transmitting/receiving antenna 230. Note that, one or more each of the control sections 210, the transmitting/receiving sections 220, and the transmitting/receiving antennas 230 may be included.

Note that, although this example mainly describes functional blocks of a characteristic part of the present embodiment, it may be assumed that the user terminal 20 includes other functional blocks that are necessary for radio communication as well. A part of processing performed by each section described below may be omitted.

The control section 210 controls the entire user terminal 20. The control section 210 can include a controller, a control circuit, and the like that are described on the basis of common recognition in the technical field related to the present disclosure.

The control section 210 may control signal generation, mapping, and the like. The control section 210 may control transmission/reception, measurement, and the like using the transmitting/receiving section 220 and the transmitting/receiving antenna 230. The control section 210 may generate data, control information, a sequence, and the like to be transmitted as signals, and may transfer the data, control information, sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmitting/receiving antenna 230 can include an antenna described on the basis of common recognition in the technical field related to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam or a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that, whether or not to apply DFT processing may be determined on the basis of configuration of transform precoding. If transform precoding is enabled for a channel (for example, PUSCH), the transmitting/receiving section 220 (transmission processing section 2211) may perform DFT processing as the transmission processing to transmit the channel by using a DFT-s-OFDM waveform, and if not, DFT processing does not have to be performed as the transmission processing.

The transmitting/receiving section 220 (RF section 222) may perform modulation to a radio frequency range, filtering processing, amplification, and the like on the baseband signal, to transmit a signal in the radio frequency range via the transmitting/receiving antenna 230.

Meanwhile, the transmitting/receiving section 220 (RF section 222) may perform amplification, filtering processing, demodulation to a baseband signal, and the like on the signal in the radio frequency range received by the transmitting/receiving antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may be constituted by at least one of the transmitting/receiving section 220 or the transmitting/receiving antenna 230.

When two or more different control resource set (CORESET) pool indices are configured and a radio link monitoring reference signal (RLM-RS) is not configured, the control section 210 may use one or more reference signals for an active transmission configuration indication (TCI) state associated with a lowest CORESET pool index for radio link monitoring. The transmitting/receiving section 220 may receive the one or more reference signals.

When the maximum number of candidates of a synchronization signal block per half frame is four, the control section 210 may select the one or more reference signals from CORESET associated with the lowest CORESET pool index according to an order from a lowest monitoring periodicity of a corresponding search space set.

When more than one CORESET is associated with the lowest CORESET pool index and associated with a search space set having a same monitoring periodicity, the control section 210 may select the one or more reference signals from CORESETs associated with the lowest CORESET pool index according to an order from a highest CORESET index.

The transmitting/receiving section 220 may receive physical downlink control channel setting information (for example, PDCCH-Config) that includes a CORESET pool index.

The one or more reference signals may be two reference signals.

### (Hardware configuration)

Note that the block diagrams that have been used to describe the above embodiments illustrate blocks in functional units. These functional blocks (components) may be implemented in arbitrary combinations of at least one of hardware and software. Further, the method for implementing each functional block is not particularly limited. That is, each functional block may be implemented by a single apparatus physically or logically aggregated, or may be implemented by directly or indirectly connecting two or more physically or logically separate apparatuses (in a wired manner, a radio manner, or the like, for example) and using these apparatuses. The functional block may be implemented by combining the one apparatus or the plurality of apparatuses with software.

Here, the functions include, but are not limited to, judging, determination, decision, calculation, computation, processing, derivation, investigation, search, confirmation, reception, transmission, output, access, solution, selection, choosing, establishment, comparison, assumption, expectation, deeming, broadcasting, notifying, communicating, forwarding, configuring, reconfiguring, allocating, mapping, assigning, and the like. For example, a functional block (component) that has a transmission function may be referred to as a transmitting section (transmitting unit), a transmitter, and the like. In any case, as described above, the implementation method is not particularly limited.

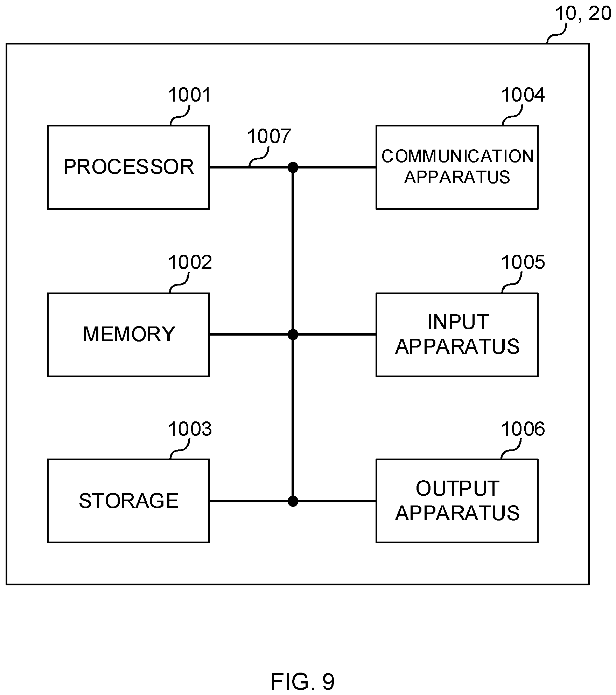

For example, the base station, the user terminal, and so on according to one embodiment of the present disclosure may function as a computer that executes the processing of the radio communication method of the present disclosure. Fig. 9 is a diagram illustrating an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, and a unit can be replaced with each other. The hardware configuration of the base station 10 and the user terminal 20 may be designed to include one or more of the apparatuses illustrated in the drawings, or may be designed not to include some apparatuses.

For example, although only one processor 1001 is shown, a plurality of processors may be provided. Further, the processing may be executed by one processor, or the processing may be executed by two or more processors simultaneously or sequentially, or using other methods. Note that the processor 1001 may be implemented with one or more chips.

Each function of the base station 10 and the user terminal 20 is implemented by, for example, reading given software (program) onto hardware such as the processor 1001 and the memory 1002, and by controlling the operation in the processor 1001, the communication in the communication apparatus 1004, and at least one of the reading or writing of data in the memory 1002 and the storage 1003.

The processor 1001 may control the whole computer by, for example, running an operating system. The processor 1001 may be configured by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

Furthermore, the processor 1001 reads programs (program codes), software modules, data, and the like from at least either the storage 1003 or the communication apparatus 1004 into the memory 1002, and executes various processing according to these. As the program, a program that causes a computer to execute at least a part of the operation described in the above-described embodiment is used. For example, the control section 110 (210) may be implemented by control programs that are stored in the memory 1002 and that operate on the processor 1001, and other functional blocks may be implemented likewise.

The memory 1002 is a computer-readable recording medium, and may include, for example, at least one of a read only memory (ROM), an erasable programmable ROM (EPROM), an electrically EPROM (EEPROM), a random access memory (RAM), or other appropriate storage media. The memory 1002 may be referred to as a register, a cache, a main memory (primary storage apparatus), and the like. The memory 1002 can store a program (program code), a software module, and the like executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disk, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as "secondary storage apparatus".

The communication apparatus 1004 is hardware (transmitting/receiving device) for performing inter-computer communication via at least one of a wired network or a wireless network, and is referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) and time division duplex (TDD). For example, the transmitting/receiving section 120 (220), the transmitting/receiving antenna 130 (230), and the like described above may be implemented by the communication apparatus 1004. The transmitting/receiving section 120 (220) may be implemented by physically or logically separating the transmitting section 120a (220a) and the receiving section 120b (220b) from each other.

The input apparatus 1005 is an input device for receiving input from the outside (for example, a keyboard, a mouse, a microphone, a switch, a button, a sensor and so on). The output apparatus 1006 is an output device that performs output to the outside (for example, a display, a speaker, a light emitting diode (LED) lamp, or the like). Note that the input apparatus 1005 and the output apparatus 1006 may be provided in an integrated structure (for example, a touch panel).

Furthermore, these apparatuses, including the processor 1001, the memory 1002, and the like are connected by the bus 1007 for communicating information. The bus 1007 may include a single bus, or may include different buses for each pair of apparatuses.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by using the hardware. For example, the processor 1001 may be implemented with at least one of these pieces of hardware.

### (Modification)

Note that terms described in the present disclosure and terms necessary for understanding the present disclosure may be replaced with terms that have the same or similar meanings. For example, a channel, a symbol, and a signal (signal or signaling) may be replaced interchangeably. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may include one or more periods (frames) in the time domain. Each of the one or more periods (frames) included in the radio frame may be referred to as a subframe. Further, the subframe may include one or more slots in the time domain. The subframe may be a fixed time duration (for example, 1 ms) that is not dependent on numerology.

Here, the numerology may be a communication parameter used for at least one of transmission or reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, specific windowing processing performed by a transceiver in the time domain, or the like.

The slot may include one or more symbols in the time domain (orthogonal frequency division multiplexing (OFDM) symbols, single carrier frequency division multiple access (SC-FDMA) symbols, and the like). Also, a slot may be a time unit based on numerology.

The slot may include a plurality of mini slots. Each mini slot may include one or more symbols in the time domain. Further, the mini slot may be referred to as a subslot. Each mini slot may include fewer symbols than the slot. A PDSCH (or PUSCH) transmitted in a time unit larger than the mini slot may be referred to as "PDSCH (PUSCH) mapping type A". A PDSCH (or PUSCH) transmitted using the mini slot may be referred to as "PDSCH (PUSCH) mapping type B".

The radio frame, the subframe, the slot, the mini slot, and the symbol each represent a time unit in signal communication. The radio frame, the subframe, the slot, the mini slot, and the symbol may be called by other applicable names, respectively. Note that time units such as the frame, the subframe, the slot, the mini slot, and the symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe and the TTI may be a subframe (1 ms) in the existing LTE, may be a period shorter than 1 ms (for example, one to thirteen symbols), or may be a period longer than 1 ms. Note that the unit to represent the TTI may be referred to as a "slot", a "mini slot", or the like, instead of a "subframe".

Here, the TTI refers to, for example, the minimum time unit of scheduling in radio communication. For example, in the LTE system, a base station performs scheduling to allocate radio resources (a frequency bandwidth, transmission power, and the like that can be used in each user terminal) to each user terminal in TTI units. Note that definition of the TTI is not limited to this.

The TTI may be a transmission time unit such as a channel-coded data packet (transport block), a code block, a codeword, or the like, or may be a processing unit such as scheduling or link adaptation. Note that when TTI is given, a time interval (for example, the number of symbols) in which the transport blocks, the code blocks, the codewords, and the like are actually mapped may be shorter than TTI.

Note that, when one slot or one mini slot is referred to as a "TTI", one or more TTIs (that is, one or more slots or one or more mini slots) may be the minimum time unit of scheduling. Also, the number of slots (the number of mini slots) to constitute this minimum time unit of scheduling may be controlled.

A TTI having a time duration of 1 ms may be referred to as a usual TTI (TTI in 3GPP Rel. 8 to 12), a normal TTI, a long TTI, a usual subframe, a normal subframe, a long subframe, a slot, or the like. A TTI that is shorter than the usual TTI may be referred to as a shortened TTI, a short TTI, a partial TTI (or fractional TTI), a shortened subframe, a short subframe, a mini slot, a subslot, a slot, or the like.

Note that the long TTI (for example, the usual TTI, the subframe, or the like) may be replaced with a TTI having a time duration exceeding 1 ms, and the short TTI (for example, the shortened TTI) may be replaced with a TTI having a TTI duration less than the TTI duration of the long TTI and not less than 1 ms.

A resource block (RB) is the unit of resource allocation in the time domain and the frequency domain, and may include one or more contiguous subcarriers in the frequency domain. The number of subcarriers included in the RB may be the same regardless of the numerology, and may be twelve, for example. The number of subcarriers included in the RB may be determined based on numerology.

Also, the RB may include one or more symbols in the time domain, and may be one slot, one mini slot, one subframe or one TTI in length. One TTI, one subframe, and the like may each include one or more resource blocks.

Note that one or more RBs may be referred to as a physical resource block (PRB), a subcarrier group (SCG), a resource element group (REG), a PRB pair, an RB pair, and the like.

Furthermore, a resource block may include one or more resource elements (REs). For example, one RE may be a radio resource field of one subcarrier and one symbol.

A bandwidth part (BWP) (which may be referred to as a partial bandwidth or the like) may represent a subset of contiguous common resource blocks (RBs) for a certain numerology in a certain carrier. Here, the common RB may be specified by the index of the RB based on a common reference point of the carrier. A PRB may be defined in a certain BWP and numbered within the BWP.

The BWP may include a BWP for UL (UL BWP) and a BWP for DL (DL BWP). For the UE, one or more BWPs may be configured within one carrier.

At least one of the configured BWPs may be active, and the UE need not expect to transmit or receive a given signal/channel outside the active BWP. Note that "cell", "carrier", and the like in the present disclosure may be read as "BWP".

Note that the structures of radio frames, subframes, slots, mini slots, symbols and so on described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

Furthermore, the information and parameters described in the present disclosure may be represented in absolute values, represented in relative values with respect to given values, or represented using other corresponding information. For example, radio resources may be indicated by a predetermined index.

Names used for, for example, parameters in the present disclosure are in no respect limitative. Further, any mathematical expression or the like that uses these parameters may differ from those explicitly disclosed in the present disclosure. Since various channels (PUCCH, PDCCH, and the like) and information elements can be identified by any suitable names, various names allocated to these various channels and information elements are not restrictive names in any respect.

The information, signals, and the like described in the present disclosure may be represented by using a variety of different technologies. For example, data, instructions, commands, information, signals, bits, symbols, chips, and the like that may be referenced throughout the above description, may be represented by voltages, currents, electromagnetic waves, magnetic fields or particles, optical fields or photons, or any combination of these.

Further, information, signals, and the like can be output in at least one of a direction from higher layers to lower layers and a direction from lower layers to higher layers. Information, signals, and the like may be input and output via a plurality of network nodes.

The information, signals, and the like that have been input and/or output may be stored in a specific location (for example, in a memory), or may be managed in a control table. The information, signals, and the like to be input and output can be overwritten, updated, or appended. The output information, signals, and the like may be deleted. The information, signals, and the like that are input may be transmitted to other apparatuses.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message, and the like. Further, notification of the MAC signaling may be performed using, for example, an MAC control element (CE).

Also, notification of given information (for example, notification of information to the effect that "X holds") does not necessarily have to be sent explicitly, and can be sent implicitly (for example, by not notifying of this piece of information, by notifying of another piece of information, and the like).

Determinations may be made in values represented by one bit (0 or 1), may be made in Boolean values that represent true or false, or may be made by comparing numerical values (for example, comparison with a given value).

Regardless of whether referred to as "software", "firmware", "middleware", "microcode" or "hardware description language", or called by other names, software should be interpreted broadly to mean instructions, instruction sets, code, code segments, program codes, programs, subprograms, software modules, applications, software applications, software packages, routines, subroutines, objects, executable files, execution threads, procedures, functions, and the like.

Also, software, commands, information and so on may be transmitted and received via communication media. For example, when software is transmitted from a website, a server, or another remote source by using at least one of a wired technology (coaxial cable, optical fiber cable, twisted pair, digital subscriber line (DSL), or the like) or a wireless technology (infrared rays, microwaves, and the like), at least one of the wired technology or the wireless technology is included within the definition of a transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmit power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of the base station or the base station subsystem that performs a communication service in this coverage.

In the present disclosure, the terms such as "mobile station (MS)", "user terminal", "user equipment (UE)", and "terminal" can be used interchangeably.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of the base station and mobile station may be called as a transmission apparatus, a reception apparatus, a wireless communication apparatus and the like. Note that at least one of the base station and the mobile station may be a device mounted on a moving body, a moving body itself, and the like. The moving body may be a transportation (for example, a car, an airplane, or the like), an unmanned moving body (for example, a drone, an autonomous car, or the like), or a (manned or unmanned) robot. Note that at least one of the base station and the mobile station also includes an apparatus that does not necessarily move during a communication operation. For example, at least one of the base station or the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. Further, terms such as "uplink" and "downlink" may be replaced with terms corresponding to communication between terminals (for example, "side"). For example, an uplink channel and a downlink channel may be replaced with a side channel.

Likewise, the user terminal in the present disclosure may be replaced with the base station. In this case, the base station 10 may be configured to have the functions of the user terminal 20 described above.

In the present disclosure, an operation performed by a base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

The aspects/embodiments illustrated in the present disclosure may be used individually or in combinations, which may be switched depending on the mode of implementation. Further, the order of processing procedures, sequences, flowcharts, and the like of the aspects/embodiments described in the present disclosure may be re-ordered as long as there is no inconsistency. For example, although various methods have been illustrated in the present disclosure with various components of steps using exemplary orders, the specific orders that are illustrated herein are by no means limiting.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), 6th generation mobile communication system (6G), xth generation mobile communication system (xG) (x is, for example, an integer or decimal), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded on the basis of these, and the like. Further, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on".

Reference to elements with designations such as "first", "second", and so on as used in the present disclosure does not generally limit the number/quantity or order of these elements. These designations can be used in the present disclosure, as a convenient way of distinguishing between two or more elements. In this way, reference to the first and second elements does not imply that only two elements may be employed, or that the first element must precede the second element in some way.

The term "determining" as used in the present disclosure may encompass a wide variety of operations. For example, "determining" may be regarded as judging, calculating, computing, processing, deriving, investigating, looking up, search, inquiry (for example, looking up in a table, database, or another data structure), ascertaining, and the like.

Furthermore, "determine" as used herein may be interpreted to mean making a determinations related to receiving (for example, receiving information), transmitting (for example, transmitting information), inputting, outputting, accessing (for example, accessing data in a memory), and the like.

In addition, "determining" as used herein may be interpreted to mean making determination related to resolving, selecting, choosing, establishing, comparing, and the like. In other words, "determining" as used herein may be interpreted to mean making determination related to some operations.

In addition, "determining" as used herein may be read as "assuming", "expecting", "considering", or the like.

The "maximum transmission power" described in the present disclosure may mean a maximum value of transmission power, nominal UE maximum transmit power, or rated UE maximum transmit power.

As used in the present disclosure, the terms "connected" and "coupled", or any variation of these terms mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

As used in the present disclosure, when two elements are connected, these elements may be considered "connected" or "coupled" to each other by using one or more electrical wires, cables, printed electrical connections, and the like, and, as a number of non-limiting and non-inclusive examples, by using electromagnetic energy having wavelengths in the radio frequency, microwave, and optical (both visible and invisible) regions, or the like.

In the present disclosure, the phrase "A and B are different" may mean "A and B are different from each other". Note that the phrase may mean that "A and B are different from C". The terms such as "separated", "coupled", and the like may be similarly interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, when articles, such as "a", "an", and "the" are added in English translation, the present disclosure may include the plural forms of nouns that follow these articles.

Now, although the invention according to the present disclosure has been described in detail above, it is obvious to a person skilled in the art that the invention according to the present disclosure is by no means limited to the embodiments described in the present disclosure. The invention according to the present disclosure can be embodied with various corrections and in various modified aspects, without departing from the spirit and scope of the invention defined on the basis of the description of claims. Consequently, the description of the present disclosure is provided only for the purpose of explaining examples, and should by no means be construed to limit the invention according to the present disclosure in any way.

## Claims

1. A terminal comprising:
a control section that, when two or more different control resource set (CORESET) pool indices are configured and a radio link monitoring reference signal (RLM-RS) is not configured, uses one or more reference signals for an active transmission configuration indication (TCI) state associated with a lowest CORESET pool index for radio link monitoring; and
a receiving section that receives the one or more reference signals.

2. The terminal according to claim 1, wherein when a maximum number of candidates of a synchronization signal block per half frame is four, the control section selects the one or more reference signals from CORESET associated with the lowest CORESET pool index according to an order from a lowest monitoring periodicity of a corresponding search space set.

3. The terminal according to claim 1, wherein when more than one CORESET is associated with the lowest CORESET pool index and associated with a search space set having a same monitoring periodicity, the control section selects the one or more reference signals from CORESETs associated with the lowest CORESET pool index according to an order from a highest CORESET index.

4. The terminal according to any one of claims 1 to 3, wherein the receiving section receives physical downlink control channel setting information that includes a CORESET pool index.

5. A radio communication method for a terminal, the method comprising:
using, when two or more different control resource set (CORESET) pool indices are configured and a radio link monitoring reference signal (RLM-RS) is not configured, one or more reference signals for an active transmission configuration indication (TCI) state associated with a lowest CORESET pool index for radio link monitoring; and
receiving the one or more reference signals.

6. A base station comprising:
a control section that, when two or more different control resource set (CORESET) pool indices are configured to a terminal and a radio link monitoring reference signal (RLM-RS) is not configured to a terminal, uses one or more reference signals for an active transmission configuration indication (TCI) state associated with a lowest CORESET pool index for radio link monitoring; and
a transmitting section that transmits the one or more reference signals.
